# EUROPÄISCHE PATENTSCHRIFT

(11) **EP 3 765 317 B1**
(45) Veröffentlichungstag und Bekanntmachung des Hinweises auf die Patenterteilung: **04.09.2024**
(21) Anmeldenummer: 19707280.4
(22) Anmeldetag: 12.02.2019
(51) Int. Cl.: B60H 1/00, B61D 27/00

(54) **VERFAHREN ZUM ÜBERWACHEN EINER KLIMAANLAGE, ÜBERWACHUNGSVORRICHTUNG UND KLIMAANLAGE**
METHOD FOR MONITORING AN AIR-CONDITIONING SYSTEM, MONITORING DEVICE AND AIR-CONDITIONING SYSTEM
PROCÉDÉ SERVANT À SURVEILLER UNE INSTALLATION DE CLIMATISATION, DISPOSITIF DE SURVEILLANCE ET INSTALLATION DE CLIMATISATION

(30) Priorität: 12.03.2018 DE 102018203669
(43) Veröffentlichungstag der Anmeldung: 20.01.2021
(73) Patentinhaber: Siemens Mobility GmbH, 81739 München (DE)
(72) Erfinder: HILDEBRANDT, Alexander, 44789 Bochum (DE); POHL, Thomas, 83278 Traunstein (DE)
(74) Vertreter: Siemens Patent Attorneys
(86) Internationale Anmeldenummer: PCT/EP2019/053438
(87) Internationale Veröffentlichungsnummer: WO 2019/174838

(56) Entgegenhaltungen:
- EP-A1- 0 069 931
- EP-A1- 3 702 237
- WO-A1-2017/212607
- DE-A1- 102015 222 531
- US-A1- 2009 105 927

## Beschreibung

Die Erfindung betrifft ein Verfahren zum Überwachen einer Klimaanlage nach dem Oberbegriff von Anspruch 1 sowie eine Überwachungsvorrichtung für eine Klimaanlage. Ferner betrifft die Erfindung eine Klimaanlage.

Ein solches bekanntes Verfahren zum Überwachen einer Klimaanlage ist in der EP 3 702 237 A1 beschrieben, wobei eine Überwachung jeweils für einzelne vorgesehene Verbraucher erfolgt. Aus der EP 0 069 931 A1 ist zudem ein Verfahren zum Überwachen einer Klimaanlage bekannt, bei dem in bestimmten Zeitabständen mittels eines Prüfimpulsgenerators ein aktueller Strommesswert ermittelt und eine Abweichung von einem Nennstromwert bestimmt wird. Bei einer merklichen Abweichung des gemessenen Wertes vom Stromnennwert wird ein Fehlersignal ausgelöst. Die US 2009/105927 A1 offenbart ein Verfahren zum Überwachen einer Klimaanlage, bei dem auf Anforderung Diagnosedaten ausgelesen werden. Die DE 10 2015 222531 A1 offenbart eine Blockierdiagnosevorrichtung für einen Klimaanlagenaktor, bei der ein Sollstromwert mit Bezug zu dem Aktor vorbestimmt wird. Ein Fall, in dem ein Stromsignal den Sollstromwert überschreitet, der von der Strommessschaltungseinheit eerfasst wird, kann als eine Blockierung des Motors erkannt werden.

Klimaanlagen, insbesondere in (Schienen-)Fahrzeugen verwendete Klimaanlagen, umfassen in der Regel eine Mehrzahl elektrischer Komponenten. Anhand statistischer Erfahrungswerte, welche mithilfe von baugleichen Komponenten aus Versuchen unter Laborbedingungen und/oder aus der Praxis unter realen Einsatzbedingungen gewonnen wurden, kann für die einzelnen elektrischen Komponenten einer Klimaanlage deren jeweilige Lebensdauer vorhergesagt werden. Steht eine Komponente kurz vor ihrem vorhergesagten Lebensdauerende, kann diese Komponente (vorsorglich) einer Wartung unterzogen werden.

Bei einer auf statistischen Erfahrungswerten beruhenden Lebensdauervorhersage für eine Klimaanlagenkomponente bleiben die tatsächlichen Belastungen, denen diese Komponente in ihrer konkreten Systemumgebung ausgesetzt ist und/oder zuvor ausgesetzt war, unberücksichtigt. Die tatsächlichen Belastungen der Komponente können jedoch einen erheblichen Einfluss auf ihre tatsächliche Lebensdauer haben, insbesondere hinsichtlich einer möglichen Verlängerung der tatsächlichen Lebensdauer gegenüber der vorhergesagten Lebensdauer.

Eine Aufgabe der Erfindung ist es, eine hohe Ausschöpfung der Lebensdauer von Klimaanlagenkomponenten zu ermöglichen.

Diese Aufgabe wird erfindungsgemäß gelöst durch ein Verfahren nach Anspruch 1, durch eine Überwachungsvorrichtung nach Anspruch 5 sowie durch eine Klimaanlage nach Anspruch 6.

Vorteilhafte Weiterbildungen der Erfindung sind in den weiteren Patentansprüchen sowie in der nachfolgenden Beschreibung angegeben.

Bei dem erfindungsgemäßen Verfahren zum Überwachen einer Klimaanlage wird von einem Strommessgerät ein zeitlicher Stromverlauf in einer elektrischen Versorgungsleitung der Klimaanlage erfasst, von einer Auswerteeinheit geprüft, ob eine Abweichung des vom Strommessgerät erfassten Stromverlaufs gegenüber einem zeitlichen Referenz-Stromverlauf einen vorgegebenen Toleranzwert überschreitet, und, falls die Abweichung den vorgegebenen Toleranzwert überschreitet, von der Auswerteeinheit ein Meldesignal erzeugt.

Die erfindungsgemäße Überwachungsvorrichtung für eine Klimaanlage umfasst ein Strommessgerät zum Erfassen eines zeitlichen Stromverlaufs in einer elektrischen Leitung der Klimaanlage und eine mit dem Strommessgerät verbindbare Auswerteeinheit. Die Auswerteeinheit der Überwachungsvorrichtung ist dazu eingerichtet, zu prüfen, ob eine Abweichung des vom Strommessgerät erfassten Stromverlaufs gegenüber einem zeitlichen Referenz-Stromverlauf einen vorgegebenen Toleranzwert überschreitet. Außerdem ist die Auswerteeinheit der Überwachungsvorrichtung dazu eingerichtet, ein Meldesignal zu erzeugen, falls die Abweichung den vorgegebenen Toleranzwert überschreitet.

Die erfindungsgemäße Überwachungsvorrichtung kann zur Durchführung des erfindungsgemäßen Verfahrens genutzt werden. Bei dem im Zusammenhang mit dem erfindungsgemäßen Verfahren genannten Strommessgerät sowie der im Zusammenhang mit dem erfindungsgemäßen Verfahren genannten Auswerteeinheit kann es sich insbesondere um das Strommessgerät und die Auswerteeinheit der Überwachungsvorrichtung handeln.

Des Weiteren ist die erfindungsgemäße Klimaanlage mit der erfindungsgemäßen Überwachungsvorrichtung ausgestattet.

Nachfolgend beschriebene Ausführungsformen, Ausführungsdetails und Vorteile können sich sowohl auf das erfindungsgemäße Verfahren als auch auf die erfindungsgemäße Überwachungsvorrichtung und die erfindungsgemäße Klimaanlage beziehen.

Die Erfindung geht von der Überlegung aus, dass der vom Strommessgerät erfasste zeitliche Stromverlauf in der elektrischen Leitung vom Ist-Zustand einer elektrischen Klimaanlagenkomponente, welche über die Leitung mit elektrischer Energie versorgt wird, abhängig ist. Folglich ist auch die Abweichung des vom Strommessgerät erfassten Stromverlaufs gegenüber dem Referenz-Stromverlauf von dem Ist-Zustand dieser Komponente abhängig. Da sich im Ist-Zustand der Klimaanlagenkomponente deren verbleibende Lebensdauer wiederspiegelt, kann die Abweichung des vom Strommessgerät erfassten Stromverlaufs gegenüber dem Referenz-Stromverlauf somit als Maß für die verbleibende Lebensdauer der Klimaanlagenkomponente genutzt werden kann.

Durch die Überprüfung der Abweichung des vom Strommessgerät erfassten Stromverlaufs gegenüber dem Referenz-Stromverlauf kann eine hohe Ausschöpfung der tatsächlichen Lebensdauer der Klimaanlagenkomponente erzielt werden, beispielweise indem die Komponente erst dann einer Wartung unterzogen wird, wenn besagte Abweichung größer ist als der vorgegebene Toleranzwert. Ist die Abweichung hingegen kleiner ist als der Toleranzwert, kann die Klimaanlagenkomponente - insbesondere ohne einer Wartung unterzogen zu werden - weiter genutzt werden.

Als zeitlicher Stromverlauf im Sinne der vorliegenden Erfindung ist ein Verlauf einer elektrischen Stromstärke als Funktion der Zeit zu verstehen.

Der zeitliche Referenz-Stromverlauf stellt - für den bei der Erfassung des Stromverlaufs mittels des Strommessgeräts vorliegenden Betriebszustand der Klimaanlage - einen Sollverlauf dar, welchem der vom Strommessgerät erfasste Stromverlauf entsprechen sollte, wenn die Klimaanlage ein ideales bzw. fehlerfreies Funktionsverhalten zeigt. Des Weiteren kann der Referenz-Stromverlauf ein statistisch gewonnener Stromverlauf sein, welcher insbesondere durch eine Mittelung mehrerer (bei anderen baugleichen Klimaanlagen) vorab aufgezeichneten Stromverläufen erhältlich ist. Zweckmäßigerweise ist der Referenz-Stromverlauf in der Auswerteeinheit hinterlegt.

Die Abweichung, die auf eine Überschreitung des Toleranzwertes hin überprüft wird, kann beispielweise eine absolute Abweichung des vom Strommessgerät erfassten Stromverlaufs gegenüber dem Referenz-Stromverlauf bei einem einzelnen Messzeitpunkt des erfassten Stromverlaufs sein. Alternativ kann die Abweichung, die auf eine Überschreitung des Toleranzwertes hin überprüft wird, eine andere Art von Abweichung sein. Zum Beispiel kann die Abweichung eine mittlere absolute Abweichung des vom Strommessgerät erfassten Stromverlaufs gegenüber dem Referenz-Stromverlauf über mehrere aufeinander folgende Messzeitpunkte sein.

Ferner kann die Abweichung des vom Strommessgerät erfassten Stromverlaufs gegenüber dem Referenz-Stromverlauf insbesondere Null sein. In diesem Fall entspricht der vom Strommessgerät erfasste Stromverlauf dem Referenz-Stromverlauf.

Der Toleranzwert gibt an, wie weit der vom Strommessgerät erfasste Stromverlauf von dem Referenz-Stromverlauf abweichen darf. Mit anderen Worten, der Toleranzwert gibt eine maximal zulässige Abweichung des vom Strommessgerät erfassten Stromverlaufs gegenüber dem Referenz-Stromverlauf an.

Eine den Toleranzwert überschreitende Abweichung des vom Strommessgerät erfassten Stromverlaufs gegenüber dem Referenz-Stromverlauf tritt vorzugsweise dann auf, wenn ein vom idealen Funktionsverhalten einer Klimaanlagenkomponente abweichendes Funktionsverhalten der Klimaanlagenkomponente vorliegt oder sich ein solches abweichendes Funktionsverhalten abzeichnet. Wird von der Auswerteeinheit festgestellt, dass die Abweichung den vorgegebenen Toleranzwert überschreitet, kann die Klimaanlagenkomponente einer Wartung unterzogen werden. Ein vom idealen Funktionsverhalten der Klimaanlagenkomponente abweichendes Funktionsverhalten kann durch das Erfassen des Stromverlaufs mittels des Strommessgeräts und das Überprüfen der Abweichung zeitnah und zuverlässig festgestellt werden.

Der Stromverlauf kann vom Strommessgerät während eines Anlaufbetriebs einer mit der elektrischen Leitung verbundenen elektrischen Klimaanlagenkomponente und/oder während deren stationären Betriebs erfasst werden. Somit kann der vom Strommessgerät erfasste Stromverlauf den Anlauf- und/oder Betriebsstrom der elektrischen Klimaanlagenkomponente umfassen. Insbesondere kann der Stromverlauf vom Strommessgerät während eines gleichzeitigen Betriebs mehrere elektrischer Klimaanlagenkomponenten erfasst werden. In letztgenanntem Fall kann der vom Strommessgerät erfasste Stromverlauf eine Überlagerung der Anlauf- und/oder Betriebsströme der in Betrieb befindlichen Klimaanlagenkomponenten umfassen.

Es kann vorgesehen sein, dass die Auswerteeinheit und das Strommessgerät permanent miteinander verbunden sind. Alternativ kann vorgesehen sein, dass die Auswerteeinheit und das Strommessgerät nur dann miteinander verbunden werden, wenn eine Übertragung des vom Strommessgerät erfassten Stromverlaufs an die Auswerteeinheit erfolgen soll. Die Auswerteeinheit und das Strommessgerät können drahtgebunden, insbesondere über ein drahtgebundenes Netzwerk, miteinander verbunden sein/werden. Alternativ können die Auswerteeinheit und das Strommessgerät über Funk miteinander verbunden sein/werden.

Eine Übertragung des vom Strommessgerät erfassten Stromverlaufs an die Auswerteeinheit kann unmittelbar nach dem Erfassen des Stromverlaufs erfolgen. Alternativ kann die Übertragung des vom Strommessgerät erfassten Stromverlaufs an die Auswerteeinheit zu einem späteren Zeitpunkt erfolgen. In letztgenanntem Fall wird der vom Strommessgerät erfasste Stromverlauf zweckmäßigerweise vor der Übertragung zwischengespeichert.

Als Strommessgerät kann beispielsweise ein digitales Leistungsmessgerät genutzt werden, welches dazu eingerichtet ist, eine elektrische Stromstärke zu messen.

Vorzugsweise hat das Strommessgerät eine Zeitauflösung im Millisekundenbereich, insbesondere im einstelligen Millisekundenbereich, oder im Sub-Millisekundenbereich. Weiter ist es bevorzugt, wenn das Strommessgerät eine Messunsicherheit von höchstens 2%, vorzugsweise höchstens 1,5%, vom Messwert aufweist. Dies ermöglicht eine präzise Erfassung des zeitlichen Stromverlaufs in besagter elektrischer Leitung, was wiederum eine präzise Ermittlung der Abweichung des vom Strommessgerät erfassten Stromverlaufs gegenüber dem Referenz-Stromverlauf ermöglicht.

In bevorzugter Weise umfasst die Klimaanlage mehrere elektrische Verbraucher. Vorteilhafterweise wird von der Auswerteeinheit erfasst, wann der jeweilige elektrische Verbraucher der Klimaanlage eingeschaltet und/oder wann der jeweilige elektrische Verbraucher der Klimaanlage ausgeschaltet wird. Mit anderen Worten, vorzugsweise erfasst die Auswerteeinheit einen Einschalt- und/oder einen Ausschaltzeitpunkt des jeweiligen elektrischen Verbrauchers.

Das Meldesignal, das von der Auswerteeinheit erzeugt wird, wenn die Abweichung des erfassten Stromverlaufs gegenüber dem Referenz-Stromverlauf den Toleranzwert überschreitet, enthält vorteilhafterweise eine Information darüber, welcher elektrische Verbraucher der Klimaanlage die Überschreitung des Toleranzwerts verursacht hat. Diese Information ermöglicht es, besagten elektrischen Verbraucher gezielt einer Wartung zu unterziehen und dabei insbesondere den elektrischen Verbraucher bzw. einzelne Bauteile des elektrischen Verbrauchers bei Bedarf auszutauschen.

Des Weiteren kann das Meldesignal über eine Ausgabeeinheit ausgegeben werden, insbesondere optisch ausgegeben werden. Die Ausgabeeinheit zur Ausgabe des Meldesignals kann insbesondere ein Bestandteil der Überwachungsvorrichtung sein. Vorzugsweise ist die Ausgabeeinheit per Funk oder drahtgebunden mit der Auswerteeinheit verbunden. Die Ausgabeeinheit kann zum Beispiel ein Bildschirm sein oder einen Bildschirm umfassen.

Der elektrischen Verbraucher der Klimaanlage, der die Überschreitung des Toleranzwerts verursacht hat, kann von der Auswerteeinheit beispielweise anhand seines Einschaltzeitpunkts und/oder anhand einer Charakteristik des vom Strommessgerät erfassten Stromverlaufs, welche dem elektrischen Verbraucher eindeutig zuordenbar ist, identifiziert werden. Solch eine Charakteristik kann zum Beispiel die Form des vom Strommessgerät erfassten Stromverlaufs oder dessen Maximaloder Minimalwert sein.

Die erfindungsgemäße Klimaanlage umfasst eine Parallelschaltung mit mehreren Zweigen, die jeweils einen elektrischen Verbraucher aufweisen, sowie eine Haupt-Versorgungsleitung zur Versorgung der Zweige mit elektrischer Energie. Die Zweige der Parallelschaltung sind jeweils an die Haupt-Versorgungsleitung angeschlossen.

Gemäß der Erfindung erfasst das Strommessgerät den zeitlichen Stromverlauf in der Haupt-Versorgungsleitung. Die zuvor erwähnte elektrische Leitung ist also die Haupt-Versorgungsleitung. Zweckmäßigerweise ist das Strommessgerät bei dieser Ausführungsvariante in der Haupt-Versorgungsleitung angeordnet. Diese Ausführungsvariante hat den Vorteil, dass das besagte Strommessgerät dazu genutzt werden kann, alle an die Haupt-Versorgungsleitung angeschlossenen Zweige bzw. deren elektrischer Verbraucher zu überwachen. Auf separate Strommessgeräte in den einzelnen Zweigen der Parallelschaltung zur Überwachung der elektrischen Verbraucher kann in diesem Fall verzichtet werden.

Bei einer nicht erfindungsgemäßen, alternativen Ausführungsvariante kann das Strommessgerät in einer elektrischen Versorgungsleitung eines der Zweige der Parallelschaltung angeordnet sein, sodass das Strommessgerät den zeitlichen Stromverlauf in dieser Versorgungsleitung erfassen kann. Ferner kann insbesondere vorgesehen sein, dass bei jedem der Zweige in dessen elektrischer Versorgungsleitung ein mit der Auswerteeinheit verbindbares oder verbundenes Strommessgerät angeordnet ist, welches einen zeitlichen Stromverlauf in der elektrischen Versorgungsleitung des jeweiligen Zweigs erfassen und an die Auswerteeinheit übermitteln kann. Des Weiteren kann die Auswerteinheit für jeden der von den Strommessgeräten übermittelten Stromverläufe ermitteln, ob eine Abweichung des jeweiligen Stromverlaufs gegenüber einem zeitlichen Referenz-Stromverlauf einen vorgegebenen Toleranzwert überschreitet.

In bevorzugter Weise umfasst der jeweilige Zweig der Parallelschaltung eine Schaltvorrichtung zum Ein- und Ausschalten seines elektrischen Verbrauchers. Die Schaltvorrichtung des jeweiligen Zweigs kann insbesondere ein Schütz sein (auch Schaltschütz genannt). Zweckmäßigerweise sind die Schaltvorrichtung und der elektrische Verbraucher des jeweiligen Zweigs in Reihe geschaltet.

Vorteilhafterweise weist die jeweilige Schaltvorrichtung einen Meldekontakt zur Rückmeldung ihres Schaltzustands an die Auswerteeinheit auf. Ferner ist es vorteilhaft, wenn die jeweilige Schaltvorrichtung mittels ihres Meldekontakts bei einem Schaltvorgang ein Rückmeldesignal erzeugt und das Rückmeldesignal an die Auswerteeinheit übermittelt.

Vorzugsweise ist das jeweilige Rückmeldesignal der zugehörigen Schaltvorrichtung eindeutig zuordenbar. Eine eindeutige Zuordenbarkeit kann zum Beispiel dadurch gegeben sein, dass jede der Schaltvorrichtungen bzw. deren jeweiliger Meldekontakt an einen eigenen Eingang der Auswerteeinheit angeschlossen ist.

In bevorzugter Weise ermittelt die Auswerteeinheit anhand der von den Schaltvorrichtungen übermittelten Rückmeldesignale die Schaltzustände der Schaltvorrichtungen. Anhand der Schaltzustände der Schaltvorrichtungen kann die Auswerteeinheit die Betriebszustände der zugehörigen elektrischen Verbraucher ermitteln.

Zusätzlich kann vorgesehen sein, die Schaltzustände der Schaltvorrichtungen anhand von Steuersignalen, durch welche Schaltvorgänge der Schaltvorrichtungen bewirkt werden, zu ermitteln. Solche Steuersignale können von der Auswerteeinheit oder von einer separaten Steuereinheit, welche die Steuersignale an die Auswerteeinheit weiterleitet, erzeugt werden.

Weiterhin ist es möglich, Sensoren zur Erfassung der Schaltzustände der Schaltvorrichtungen zu verwenden. Solche Sensoren dienen vorzugsweise dazu, Sensorsignale erzeugen, die von den Schaltzuständen der Schaltvorrichtungen abhängig sind, und die Sensorsignale zur Ermittlung der Schaltzustände der Schaltvorrichtungen an die Auswerteeinheit zu übermitteln.

Bei einer bevorzugten Ausführungsform der Erfindung weist der jeweilige Zweig der Parallelschaltung einen elektrischen Antriebsmotor oder ein elektrisches Heizelement als elektrischen Verbraucher auf. Der jeweilige Antriebsmotor kann beispielsweise ein Motor für eine Strömungs- oder Kolbenmaschine, insbesondere für einen Zulüfter, einen Fortlüfter, einen Kondensatorlüfter oder einen Verdichter, sein.

Die Auswerteeinheit ist vorteilhafterweise mit einem Datenspeicher ausgestattet, in welchem ein Computerprogramm hinterlegt werden kann. Außerdem weist die Auswerteeinheit vorteilhafterweise einen Prozessor auf, mittels welchem ein im Datenspeicher hinterlegtes Computerprogramm ausgeführt werden kann.

Vorzugsweise ist die Auswerteeinheit mithilfe eines im Datenspeicher hinterlegten und vom Prozessor ausführbaren Computerprogramms dazu eingerichtet, die weiter oben im Zusammenhang mit der Auswerteeinheit erwähnten Verfahrensschritte auszuführen.

Zur Überwachung eines Kältekreislaufs der Klimaanlage kann die Überwachungsvorrichtung ferner einen oder mehrere Drucksensoren und/oder einen oder mehrere Temperatursensoren aufweisen. Dieser Sensor bzw. diese Sensoren kann/können Druckund/oder Temperaturwerte des Kältekreislaufs erfassen und diese Messwerte zu deren Verarbeitung an die Auswerteeinheit übermitteln.

Zur Überwachung eines Heizregisters der Klimaanlage kann die Überwachungsvorrichtung außerdem eine oder mehrere Einrichtungen umfassen, wie zum Beispiel einen oder mehrere Temperatursensoren, ein oder mehrere Thermostate und/oder einen oder mehrere Übertemperaturschutzschalter. Diese Einrichtung bzw. diese Einrichtungen kann/können Messwerte erfassen und/oder Signale erzeugen und die Signale/Messwerte zu deren Verarbeitung an die Auswerteeinheit übermitteln.

Das erfindungsgemäße Verfahren kann beispielsweise bei einem mit einer Klimaanlage ausgestatteten Fahrzeug durchgeführt werden, um die Klimaanlage des Fahrzeugs zu überwachen. Weiterhin kann die erfindungsgemäße Klimaanlage ein Bestandteil eines Fahrzeugs, insbesondere eines Schienenfahrzeugs, sein.

Wenn das Verfahren bei einem Fahrzeug zum Einsatz kommt, muss die Auswerteeinheit nicht notwendigerweise innerhalb des Fahrzeugs angeordnet sein. Kommt das Verfahren beispielsweise bei einem Schienenfahrzeug eines aus mehreren Schienenfahrzeugen (Wagen) bestehenden Schienenfahrzeugverbunds zum Einsatz, kann das Strommessgerät in einem anderen Schienenfahrzeug des Schienenfahrzeugverbunds angeordnet sein als die Auswerteeinheit.

Eine weitere Möglichkeit ist, dass das Strommessgerät in einem Fahrzeug angeordnet ist, wohingegen die Auswerteeinheit in einer ortsfesten Einrichtung angeordnet ist. In diesem Fall erfolgt die Übertragung des vom Strommessgerät erfassten Stromverlaufs an die Auswerteeinheit vorzugsweise per Funk.

Bei einem aus mehreren Schienenfahrzeugen (Wagen) bestehenden Schienenfahrzeugverbund kann jedes der Schienenfahrzeuge eine Klimaanlage mit einem Strommessgerät der zuvor beschriebenen Art aufweisen. Zur Überprüfung der von den mehreren Strommessgeräten erfassten zeitlichen Stromverläufe kann eine gemeinsame Auswerteeinheit verwendet werden, die beispielweise in einem der Schienenfahrzeuge oder in einer ortsfesten Einrichtung angeordnet sein kann.

Bezüglich möglicher Positionierungen der gegebenenfalls vorhandenen Ausgabeeinheit gilt das gleiche wie für die Auswerteinheit.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung eines Ausführungsbeispiels der Erfindung, das im Zusammenhang mit den Figuren näher erläutert wird. Das Ausführungsbeispiel dient der Erläuterung der Erfindung und beschränkt die Erfindung nicht auf die darin angegebenen Kombinationen von Merkmalen, auch nicht in Bezug auf funktionale Merkmale.

Es zeigen:
- FIG 1: eine schematische Darstellung eines Schienenfahrzeugs mit einer Klimaanlage, welche eine Überwachungsvorrichtung mit einem Strommessgerät und einer Auswerteeinheit aufweist;
- FIG 2: ein Strom-Zeit-Diagramm, in dem ein von dem Strommessgerät erfasster zeitlicher Stromverlauf sowie ein zeitlicher Referenz-Stromverlauf dargestellt sind.

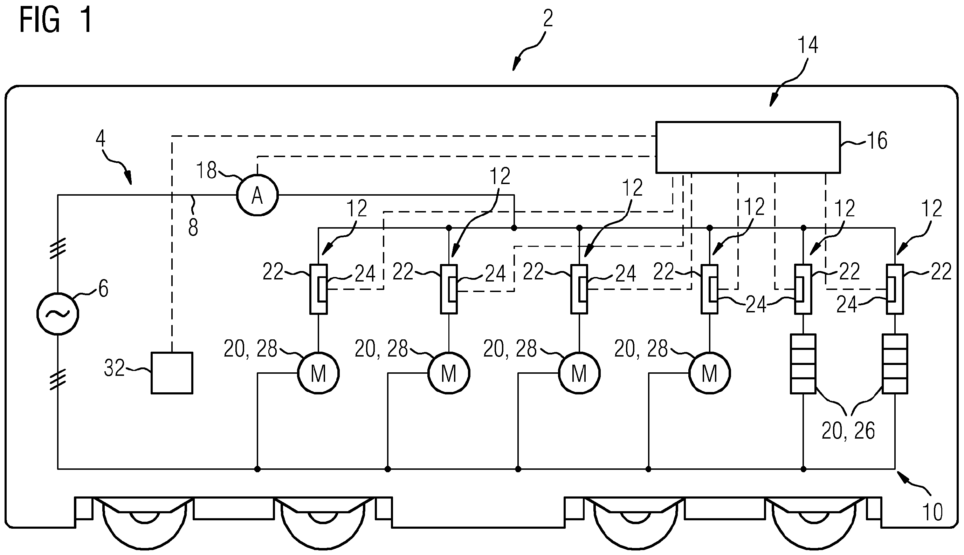

FIG 1 zeigt schematisch ein Fahrzeug 2, das mit einer Klimaanlage 4 ausgestattet ist. Bei dem Fahrzeug 2 handelt es sich im vorliegenden Ausführungsbeispiel um ein Schienenfahrzeug. In FIG 1 ist ein Teil der Klimaanlage 4 des Fahrzeugs 2 in Form eines Schaltbilds dargestellt. Auch wenn die in FIG 1 abgebildeten Komponenten der Klimaanlage 4 (zwecks einer besseren grafischen Darstellbarkeit) innerhalb des Fahrzeugs 2 dargestellt sind, soll dies nicht implizieren, dass diese Komponenten im Inneren des Fahrzeugs 2 angeordnet sein müssen. Einige oder sogar alle der nachfolgend genannten Komponenten der Klimaanlage 4 können außen am Fahrzeug 2 angeordnet sein.

Die Klimaanlage 4 umfasst eine dreiphasige Wechselspannungsquelle 6 sowie eine an die Wechselspannungsquelle 6 angeschlossene Haupt-Versorgungsleitung 8. Des Weiteren umfasst die Klimaanlage 4 eine Parallelschaltung 10 mit mehreren Zweigen 12, die jeweils mit der Haupt-Versorgungsleitung 8 verbunden sind und über die Haupt-Versorgungsleitung 8 mit elektrischer Energie versorgt werden.

Außerdem ist die Klimaanlage 4 mit einer Überwachungsvorrichtung 14 ausgestattet. Die Überwachungsvorrichtung 14 umfasst eine Auswerteeinheit 16 sowie ein mit der Auswerteeinheit 16 verbundenes Strommessgerät 18, das in der Haupt-Versorgungsleitung 8 angeordnet ist.

Jeder der Zweige 12 der Parallelschaltung 10 umfasst einen elektrischen Verbraucher 20 sowie eine mit dem elektrischen Verbraucher 20 in Reihe geschaltete Schaltvorrichtung 22 zum Ein- und Ausschalten des elektrischen Verbrauchers 20. Die jeweilige Schaltvorrichtung 22 kann beispielweise ein Schütz sein. Zur Rückmeldung ihres Schaltzustands an die Auswerteeinheit 16 weist jede der Schaltvorrichtungen 22 einen mit der Auswerteeinheit 16 verbundenen Meldekontakt 24 auf.

Die jeweilige Schaltvorrichtung 22 erzeugt bei einem Schaltvorgang mithilfe ihres Meldekontakts 24 ein Rückmeldesignal und übermittelt dieses an die Auswerteeinheit 16. Anhand der von den Schaltvorrichtungen 22 übermittelten Rückmeldesignale ermittelt die Auswerteeinheit 16 die Schaltzustände der Schaltvorrichtungen 22. Auf diese Weise ermittelt die Auswerteeinheit 16, welche der elektrischen Verbraucher 20 der Parallelschaltung 10 eingeschaltet und/oder welche der elektrischen Verbraucher 20 ausgeschaltet sind.

Ferner kann der jeweilige Zweig 12 gegebenenfalls ein mit seinem elektrischen Verbraucher 20 in Reihe geschaltetes (figürlich nicht dargestelltes) Schutzelement, wie zum Beispiel ein Leitungsschutzschalter oder dergleichen, aufweisen.

Bei den elektrischen Verbrauchern 20 der Parallelschaltung 10 kann es sich jeweils beispielweise um ein elektrisches Heizelement 26 oder um einen elektrischen Antriebsmotor 28, insbesondere für eine Strömungsmaschine oder eine Kolbenmaschine, handeln. Die als Antriebsmotoren 28 ausgebildeten elektrischen Verbraucher 20 können zum Beispiel jeweils dazu dienen, ein Laufrad einer Strömungsmaschine, insbesondere eines Lüfters, oder einen Kolben einer Kolbenmaschine, insbesondere eines Kolbenverdichters, anzutreiben. Einige oder alle der als Antriebsmotoren 28 ausgebildeten elektrischen Verbraucher 20 können insbesondere elektronisch kommutierte Antriebsmotoren sein.

Außerdem umfasst die Überwachungsvorrichtung 14 eine mit der Auswerteeinheit 16 verbundene Ausgabeeinheit 32.

Zusätzlich zu den zuvor genannten Elementen kann die Klimaanlage 4 des Fahrzeugs 2 weitere Elemente umfassen, die einer besseren Übersichtlichkeit halber figürlich nicht dargestellt sind.

Das Strommessgerät 18 der Überwachungsvorrichtung 14 erfasst einen zeitlichen Stromverlauf in der Haupt-Versorgungsleitung 8. Hierbei misst das Strommessgerät 18 wiederholt in einem vorgegebenen Zeitabstand die Stromstärke in der Haupt-Versorgungsleitung 8. Des Weiteren übermittelt das Strommessgerät 18 den erfassten Stromverlauf an die Auswerteeinheit 16.

Die Auswerteeinheit 16 prüft, ob eine Abweichung des vom Strommessgerät 18 erfassten Stromverlaufs gegenüber einem zeitlichen Referenz-Stromverlauf einen vorgegebenen Toleranzwert überschreitet. Falls die Abweichung den vorgegebenen Toleranzwert überschreitet, erzeugt die Auswerteeinheit 16 ein Meldesignal und übermittelt das Meldesignal an die Ausgabeeinheit 32, die das von der Auswerteeinheit 16 übermittelte Meldesignal optisch ausgibt.

Der besagte Referenz-Stromverlauf ist einer von mehreren in der Auswerteeinheit 16 hinterlegten Referenz-Stromverläufen, wobei die in der Auswerteeinheit 16 hinterlegten Referenz-Stromverläufe jeweils unterschiedlichen Betriebszuständen der Klimaanlage 4 zugeordnet sind.

Welcher der mehreren in der Auswerteeinheit 16 hinterlegten Referenz-Stromverläufe für die zuvor erwähnte Prüfung verwendet wird, hängt davon, in welchem Betriebszustand sich die Klimaanlage 4 befindet. Das heißt, welcher der mehreren Referenz-Stromverläufe für die zuvor erwähnte Prüfung verwendet wird, hängt davon ab, welche der elektrischen Verbraucher 20 der Klimaanlage 4 eingeschaltet sind und welche der elektrischen Verbraucher 20 ausgeschaltet sind.

Der Referenz-Stromverlauf, gegenüber dem bei der zuvor erwähnten Prüfung die Abweichung des vom Strommessgerät 18 erfassten Stromverlaufs ermittelt wird, ist derjenige Referenz-Stromverlauf, dem der gleiche Betriebszustand der Klimaanlage 4 zugeordnet ist, der auch bei der Erfassung des Stromverlaufs mittels des Strommessgeräts 18 vorliegt.

Das Meldesignal, das von der Auswerteeinheit 16 erzeugt wird, enthält eine Information darüber, welcher der elektrischen Verbraucher 20 der Klimaanlage 4 die Überschreitung des Toleranzwerts verursacht hat. Anhand dieser Information kann besagter elektrischer Verbraucher 20 gezielt einer Wartung unterzogen werden.

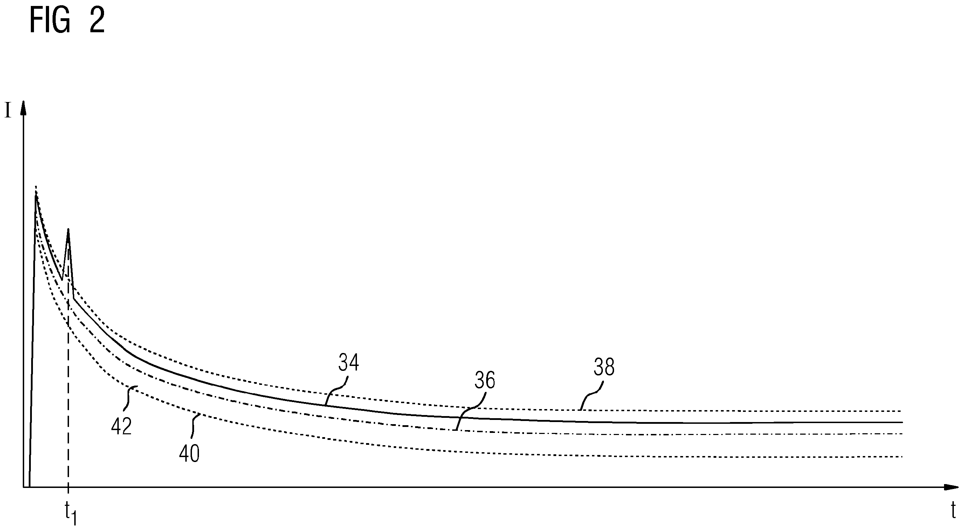

FIG 2 zeigt ein Strom-Zeit-Diagramm, in dem ein vom Strommessgerät 18 erfasster zeitlicher Stromverlauf 34 dargestellt ist. Auf der Abszisse des Diagramms ist die Zeit *t* aufgetragen, während auf der Ordinate des Diagramms die vom Strommessgerät 18 gemessene Stromstärke *I* aufgetragen ist.

Ferner ist in dem Strom-Zeit-Diagramm aus FIG 2 ein Referenz-Stromverlauf 36 dargestellt, dem der gleiche Betriebszustand der Klimaanlage 4 zugeordnet ist, der auch bei der Erfassung des Stromverlaufs 34 mittels des Strommessgeräts 18 vorliegt.

Ferner ist in dem Strom-Zeit-Diagramm aus FIG 2 ein durch eine Obergrenze 38 und eine Untergrenze 40 begrenztes Toleranzband 42 dargestellt, innerhalb dessen der Referenz-Stromverlauf 36 liegt. Das Toleranzband 42 definiert einen Bereich, innerhalb dessen der vom Strommessgerät 18 erfasste Stromverlauf 34 liegen sollte, wenn die Klimaanlage 4 ein ideales bzw. fehlerfreies Funktionsverhalten zeigt.

In FIG 2 ist der Abstand, den der Referenz-Stromverlauf 36 im jeweiligen Zeitpunkt zu der Obergrenze 38 des Toleranzbandes 42 aufweist, beispielhaft gleich dem Abstand, den der Referenz-Stromverlauf 36 in demselben Zeitpunkt zu der Untergrenze 40 des Toleranzbandes 42 aufweist. Dies muss allerdings nicht notwendigerweise der Fall sein. Beispielsweise kann die Untergrenze 40 des Toleranzbandes 42 zumindest abschnittsweise einen geringeren Abstand zu dem Referenz-Stromverlauf 36 aufweisen als die Obergrenze 38 des Toleranzbandes 42. Des Weiteren muss der Abstand, den Referenz-Stromverlauf 36 zur Obergrenze 38 des Toleranzbandes 42 aufweist, nicht notwendigerweise über die Zeit konstant sein. Auch der Abstand, den Referenz-Stromverlauf 36 zur Untergrenze 40 des Toleranzbandes 42 aufweist, muss nicht notwendigerweise über die Zeit konstant sein.

Die von der Auswerteeinheit 16 durchgeführte Prüfung, ob eine Abweichung des vom Strommessgerät 18 erfassten Stromverlaufs 34 gegenüber dem Referenz-Stromverlauf 36 einen vorgegebenen Toleranzwert überschreitet, erfolgt im vorliegenden Ausführungsbeispiel in der Weise, dass die Auswerteeinheit 16 prüft, ob der vom Strommessgerät 18 erfasste Stromverlauf 34 innerhalb des Toleranzbandes 42 liegt. Mit anderen Worten, die Auswerteeinheit 16 prüft, ob es bei irgendeinem Messzeitpunkt eine Abweichung des vom Strommessgerät 18 erfassten Stromverlaufs 34 gegenüber dem Referenz-Stromverlauf 36 gibt, welche größer ist als der Abstand zwischen dem Referenz-Stromverlauf 36 und der Obergrenze 38 des Toleranzbandes 42 bzw. größer ist als der Abstand zwischen dem Referenz-Stromverlauf 36 und der Untergrenze 40 des Toleranzbandes 42 in dem jeweiligen Messzeitpunkt.

Weicht der vom Strommessgerät 18 erfasste Stromverlauf 34 (wie in FIG 2 exemplarisch zum Zeitpunkt *t₁*) über das Toleranzband 42 hinaus von dem Referenz-Stromverlauf 36 ab, wird von der Auswerteeinheit 16 das zuvor erwähnte Meldesignal erzeugt.

Die in FIG 2 dargestellten Formen des vom Strommessgerät 18 erfassten zeitlichen Stromverlaufs 34, des Referenz-Stromverlaufs 36 sowie des Toleranzbandes 42 sind willkürlich gewählt und sollen lediglich das Verständnis der Erfindung erleichtern.

Obwohl die Erfindung im Detail durch das bevorzugte Ausführungsbeispiel näher illustriert und beschrieben wurde, so ist die Erfindung nicht durch das offenbarte Beispiel eingeschränkt und andere Variationen können hieraus abgeleitet werden, ohne den durch die Ansprüche festgelegten Schutzumfang der Erfindung zu verlassen.

### Bezugszeichenliste

- 2: Fahrzeug
- 4: Klimaanlage
- 6: Wechselspannungsquelle
- 8: Haupt-Versorgungsleitung
- 10: Parallelschaltung
- 12: Zweig
- 14: Überwachungsvorrichtung
- 16: Auswerteeinheit
- 18: Strommessgerät
- 20: Verbraucher
- 22: Schaltvorrichtung
- 24: Meldekontakt
- 26: Heizelement
- 28: Antriebsmotor
- 32: Ausgabeeinheit
- 34: Stromverlauf
- 36: Referenz-Stromverlauf
- 38: Obergrenze
- 40: Untergrenze
- 42: Toleranzband

## Patentansprüche

1. Verfahren zum Überwachen einer Klimaanlage (4),
bei dem von einem Strommessgerät (18) ein zeitlicher Stromverlauf (34) in einer elektrischen Versorgungsleitung (8) der Klimaanlage (4) erfasst wird, von einer Auswerteeinheit (16) geprüft wird, ob eine Abweichung des vom Strommessgerät (18) erfassten zeitlichen Stromverlaufs (34) gegenüber einem zeitlichen Referenz-Stromverlauf (36) einen vorgegebenen Toleranzwert überschreitet, und, falls die Abweichung den vorgegebenen Toleranzwert überschreitet, von der Auswerteeinheit (16) ein Meldesignal erzeugt wird,
**dadurch gekennzeichnet, dass** die Klimaanlage (4) eine Parallelschaltung (10) mit mehreren Zweigen (12), die jeweils einen elektrischen Verbraucher (20) umfassen, sowie eine Haupt-Versorgungsleitung (8) zur Versorgung der Zweige (12) mit elektrischer Energie aufweist, wobei das Strommessgerät (18) den zeitlichen Stromverlauf (34) in der Haupt-Versorgungsleitung (8) erfasst.

2. Verfahren nach Anspruch 1,
**dadurch gekennzeichnet, dass** die Klimaanlage (4) mehrere elektrische Verbraucher (20) aufweist und von der Auswerteeinheit (16) erfasst wird, wann der jeweilige elektrische Verbraucher (20) eingeschaltet und/oder wann der jeweilige elektrische Verbraucher (20) ausgeschaltet wird.

3. Verfahren nach Anspruch 1 oder 2,
**dadurch gekennzeichnet, dass** das Meldesignal, das von der Auswerteeinheit (16) erzeugt wird, wenn die Abweichung des erfassten Stromverlaufs (34) gegenüber dem Referenz-Stromverlauf (36) den Toleranzwert überschreitet, eine Information darüber enthält, welcher elektrische Verbraucher (20) der Klimaanlage (4) die Überschreitung des Toleranzwerts verursacht hat.

4. Verfahren nach einem der voranstehenden Ansprüche,
wobei das Verfahren bei einem mit einer Klimaanlage (4) ausgestatteten Fahrzeug (2) durchgeführt wird, um die Klimaanlage (4) des Fahrzeugs (2) zu überwachen.

5. Überwachungsvorrichtung (14) für eine Klimaanlage (4),
bei der ein Strommessgerät (18) zum Erfassen eines zeitlichen Stromverlaufs (34) in einer elektrischen Versorgungsleitung (8) der Klimaanlage (4) und eine mit dem Strommessgerät (18) verbindbare Auswerteeinheit (16), welche dazu eingerichtet ist, zu prüfen, ob eine Abweichung des vom Strommessgerät (18) erfassten zeitlichen Stromverlaufs (34) gegenüber einem zeitlichen Referenz-Stromverlauf (36) einen vorgegebenen Toleranzwert überschreitet, und, falls die Abweichung den vorgegebenen Toleranzwert überschreitet, ein Meldesignal zu erzeugen,
**dadurch gekennzeichnet, dass** die Klimaanlage (4) eine Parallelschaltung (10) mit mehreren Zweigen (12), die jeweils einen elektrischen Verbraucher (20) umfassen, sowie eine Haupt-Versorgungsleitung (8) zur Versorgung der Zweige (12) mit elektrischer Energie aufweist, wobei das Strommessgerät (18) den zeitlichen Stromverlauf (34) in der Haupt-Versorgungsleitung (8) erfasst.

6. Klimaanlage (4) mit einer Überwachungsvorrichtung (14) nach Anspruch 5.

7. Klimaanlage (4) nach Anspruch 6,
**dadurch gekennzeichnet, dass** der jeweilige Zweig (12) der Parallelschaltung (10) eine Schaltvorrichtung (22) zum Ein- und Ausschalten seines elektrischen Verbrauchers (20) umfasst,
wobei die jeweilige Schaltvorrichtung (22) einen Meldekontakt (24) zur Rückmeldung ihres Schaltzustands an die Auswerteeinheit (16) aufweist.

8. Klimaanlage (4) nach Anspruch 6 oder 7,
**dadurch gekennzeichnet, dass** der jeweilige Zweig (12) der Parallelschaltung (10) einen elektrischen Antriebsmotor (28) oder ein elektrisches Heizelement (26) als elektrischen Verbraucher (20) aufweist.

## Claims

1. Method for monitoring an air conditioning system (4),
in which a current measurement device (18) captures a temporal current profile (34) in an electrical supply line (8) of the air conditioning system (4), an evaluation unit (16) checks whether a deviation of the temporal current profile (34) captured by the current measurement device (18) from a temporal reference current profile (36) exceeds a predefined tolerance value, and, if the deviation exceeds the predefined tolerance value, the evaluation unit (16) generates a signal,
**characterized in that** the air conditioning system (4) has a parallel circuit (10) comprising a plurality of branches (12), each comprising an electrical load (20), and a main supply line (8) for supplying the branches (12) with electrical energy, wherein the current measurement device (18) captures the temporal current profile (34) in the main supply line (8).

2. Method according to Claim 1,
**characterized in that** the air conditioning system (4) has a plurality of electrical loads (20) and the evaluation unit (16) captures when the respective electrical load (20) is switched on and/or when the respective electrical load (20) is switched off.

3. Method according to Claim 1 or 2,
**characterized in that** the signal which is generated by the evaluation unit (16) when the deviation of the captured current profile (34) from the reference current profile (36) exceeds the tolerance value contains information on which electrical load (20) of the air conditioning system (4) has caused the tolerance value to be exceeded.

4. Method according to one of the preceding claims,
wherein the method is carried out in a vehicle (2) equipped with an air conditioning system (4) in order to monitor the air conditioning system (4) of the vehicle (2).

5. Monitoring apparatus (14) for an air conditioning system (4),
comprising a current measurement device (18) for capturing a temporal current profile (34) in an electrical supply line (8) of the air conditioning system (4) and an evaluation unit (16) which can be connected to the current measurement device (18) and is configured to check whether a deviation of the temporal current profile (34) captured by the current measurement device (18) from a temporal reference current profile (36) exceeds a predefined tolerance value and, if the deviation exceeds the predefined tolerance value, to generate a signal,
**characterized in that** the air conditioning system (4) has a parallel circuit (10) comprising a plurality of branches (12), each comprising an electrical load (20), and a main supply line (8) for supplying the branches (12) with electrical energy, wherein the current measurement device (18) captures the temporal current profile (34) in the main supply line (8).

6. Air conditioning system (4) having a monitoring apparatus (14) according to Claim 5.

7. Air conditioning system (4) according to Claim 6, **characterized in that** the respective branch (12) of the parallel circuit (10) comprises a switching apparatus (22) for switching its electrical load (20) on and off, wherein the respective switching apparatus (22) has a signalling contact (24) for feeding its switching state back to the evaluation unit (16).

8. Air conditioning system (4) according to Claim 6 or 7, **characterized in that** the respective branch (12) of the parallel circuit (10) has an electrical drive motor (28) or an electrical heating element (26) as an electrical load (20).

## Revendications

1. Procédé de contrôle d'une installation (4) de conditionnement d'air,
dans lequel on détecte par un appareil (18) de mesure du courant une courbe (34) du courant en fonction du temps dans une ligne (8) d'alimentation électrique de l'installation (4) de conditionnement d'air, on vérifie par une unité (16) d'analyse si un écart de la courbe (34) du courant en fonction du temps détecté par l'appareil (18) de mesure du courant dépasse d'une valeur de tolérance donnée à l'avance une courbe (36) du courant de référence en fonction du temps et, si l'écart dépasse la valeur de tolérance donnée à l'avance, on produit un signal d'avertissement par l'unité (16) d'évaluation,
**caractérisé en ce que** l'installation (4) de conditionnement d'air a un circuit (10) parallèle ayant plusieurs branches (12), qui comprennent chacune un consommateur (20) électrique ainsi qu'une ligne (8) d'alimentation principale pour l'alimentation des branches (12) en énergie électrique, l'appareil (18) de mesure du courant détectant la courbe (34) du courant en fonction du temps dans la ligne (8) d'alimentation principale.

2. Procédé suivant la revendication 1,
**caractérisé en ce que** l'installation (4) de conditionnement d'air a plusieurs consommateurs (20) électriques et on détecte, par l'unité (16) d'évaluation, quand le consommateur (20) électrique respectif est mis en circuit et/ou quand le consommateur (20) électrique respectif est mis hors circuit.

3. Procédé suivant la revendication 1 ou 2,
**caractérisé en ce que** le signal d'avertissement, que l'on produit par l'unité (16) d'évaluation si l'écart de la courbe (34) de courant détecté par rapport à la courbe (36) de courant de référence dépasse la valeur de tolérance, contient une information sur le consommateur (20) électrique de l'installation (4) de conditionnement d'air, qui a provoqué le dépassement de la valeur de tolérance.

4. Procédé suivant l'une des revendications précédentes,
dans lequel on effectue le procédé dans un véhicule (2) équipé d'une installation (4) de conditionnement d'air, afin de contrôler l'installation (4) de conditionnement d'air du véhicule (2).

5. Dispositif (14) de contrôle d'une installation (4) de conditionnement d'air, comprenant un appareil (18) de mesure du courant pour la détection d'une courbe (34) du courant, en fonction du temps dans une ligne (8) d'alimentation électrique de l'installation (4) de conditionnement d'air et une unité (16) d'évaluation, qui peut être reliée à l'appareil (18) de mesure de courant et qui est agencée pour vérifier si un écart de la courbe (34) de courant en fonction du temps détecté par l'appareil (18) de mesure du courant par rapport à une courbe (36) de courant de référence en fonction du temps dépasse une valeur de tolérance donnée à l'avance et, si l'écart dépasse la valeur de tolérance donnée à l'avance, pour produire un signal d'avertissement,
**caractérisé en ce que** l'installation (4) de conditionnement d'air a un circuit (10) parallèle ayant plusieurs branches (12), qui comprennent chacune un consommateur (20) électrique ainsi qu'une ligne (8) d'alimentation principale pour l'alimentation des branches (12) en énergie électrique, l'appareil (18) de mesure du courant détectant la courbe (34) du courant en fonction du temps dans la ligne (8) d'alimentation principale.

6. Installation (4) de conditionnement d'air ayant un dispositif (14) de contrôle suivant la revendication 5.

7. Installation (4) de conditionnement d'air suivant la revendication 6,
**caractérisée en ce que** la branche (12) respective du circuit (10) en parallèle comprend un dispositif (22) de coupure pour la mise en circuit et hors circuit de son consommateur (20) électrique,
dans lequel le dispositif (22) respectif de coupure a un contact (24) d'indication pour l'annonce en retour de son état de coupure à l'unité (16) d'évaluation.

8. Installation (4) de conditionnement d'air suivant la revendication 6 ou 7,
**caractérisée en ce que** la branche (12) respective du circuit (10) en parallèle a un moteur (28) d'entraînement électrique ou un élément (26) de chauffage électrique comme consommateur (20) électrique.
